## Europäisches Patentamt

## European Patent Office

## Office européen des brevets

(19)

(11) Veröffentlichungsnummer: **0 054 803**
A1

(12) **EUROPÄISCHE PATENTANMELDUNG**

(21) Anmeldenummer: 81110174.0

(22) Anmeldetag: 05.12.81

(51) Int. Cl.³: **C 08 G 18/83,** C 08 G 18/08, C 08 G 85/00, C 08 F 8/44, C 08 J 3/02, C 08 G 18/48, C 09 D 3/72

(30) Priorität: 19.12.80 DE 3048085

(43) Veröffentlichungstag der Anmeldung: 30.06.82 Patentblatt 82/26

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Lorenz, Otto, Dr. Prof., Kurbrunnenstrasse 22, D-5100 Aachen (DE)**
Erfinder: **Dieterich, Dieter, Dr., Ludwig-Girtler-Strasse 1, D-5090 Leverkusen (DE)**

(54) Dispersionen von Sulfonatgruppen aufweisende Polymeren, ein Verfahren zu ihrer Herstellung, sowie ihre Verwendung als Beschichtungsmittel.

(57) Die vorliegende Erfindung betrifft wäßrige Dispersionen von 0,1 bis 6 Gew.-% an eingebauten Sulfonatgruppen aufweisenden Polymeren, welche neben diesen Polymeren keine weiteren in Wasser löslichen niedermolekularen Elektrolyte enthalten, und in denen als Gegenionen zu den chemisch eingebauten Sulfonatanionen zu mindestens 80 Äquivalentprozent, bezogen auf die Gesamtmenge der vorliegenden Kationen, Kationen von mindestens zweiwertigen Metallen, des Silbers oder des einwertigen Kupfers vorliegen, ein Verfahren zur Herstellung derartiger Dispersionen aus entsprechenden Dispersionen, in denen als Gegenionen Alkalimetall- oder einwertige Ammoniumkationen vorliegen durch Behandlung mit einem Kationenaustauscher der mit Kationen der genannten Art beladen ist, sowie die Verwendung der Dispersionen als Beschichtungsmittel für flexible oder nichtflexible Substrate.

BAYER AKTIENGESELLSCHAFT     5090 Leverkusen, Bayerwerk
Zentralbereich
Patente, Marken und Lizenzen   Wr/kl-c

Dispersionen von Sulfonatgruppen aufweisenden Polymeren, ein Verfahren zu ihrer Herstellung, sowie ihre Verwendung als Beschichtungsmittel

Die vorliegende Erfindung betrifft neuartige, einwertige Kupfer- oder Silberionen oder Kationen von mehrwertigen Metallen enthaltende Dispersionen von Sulfonatgruppen aufweisenden Polymeren, ein Verfahren zu ihrer Herstellung durch Behandlung von an sich bekannten Dispersionen von Sulfonatgruppen aufweisenden Polymeren mit derartige Kationen aufweisenden Ionenaustauschern, sowie die Verwendung der neuen Dispersionen als Beschichtungsmittel für beliebige flexible oder nichtflexible Substrate.

Wäßrige Dispersionen von Sulfonatgruppen aufweisenden Polymeren bzw. Verfahren zu deren Herstellung sind bereits in großer Anzahl bekannt geworden. So werden beispielsweise in US-PS 3 479 310, GB-PS 1 076 688, GB-PS 1 336 050, GB-PS 1 280 750, US-PS 3 756 992, US-PS 4 108 814, US-PS 4 092 286, DE-OS 2 030 571, DE-OS 1 954 090, DE-OS 2 651 505, DE-OS 2 725 589, DE-OS ⌐ 732 131, DE-OS 2 634 576 oder DE-OS 2 811 148 wäßrige

Le A 20 714  Ausland

0054803

Dispersionen von Sulfonatgruppen aufweisenden Polyurethanen bzw. Verfahren zu ihrer Herstellung beschrieben. Andere Polymerdispersionen, die Sulfonatgruppen enthalten, sind z.B. von H. Warson in Polym. Paint Colour J. 164 (1974), Nr. 3879, S. 758-760; von M.S. Juang, I.M. Krieger in J. Polym. Sci., Polym. Chem. Ed. 14 (1976), Nr. 9, S. 2089-2107 oder in DE-OS 2 549 650 bzw. 2 526 717 beschrieben worden.

Diesen vorbekannten Dispersionen von Sulfonatgruppen aufweisenden Polymeren gemeinsam ist der Umstand, daß die Gegenionen zu den eingebauten Sulfonatanionen Alkalimetall- oder einwertige Ammoniumkationen insbesondere solche, die sich von tertiären Aminen ableiten, darstellen. Es handelt sich somit bei den Polyurethanen um sogenannte "Polyurethanionomere", die einerseits wegen ihres Salzcharakters in Wasser selbst dispergierbar sind, die jedoch andererseits nach der Verarbeitung der Dispersionen als Beschichtungsmittel zu Beschichtungen führen, deren Wasserresistenz noch verbesserungswürdig ist.

Wie nun überraschenderweise gefunden wurde ist es möglich, die genannten, in den bekannten Polymerinsbesondere Polyurethandispersionen vorliegenden Kationen durch Behandlung der Dispersionen mit üblichen Kationenaustauschern gegen Kationen der nachstehend genannten Art auszutauschen. Dieser Befund ist überraschend, da erwartet werden mußte, daß eine Behandlung der Dispersionen mit Kationenaustauschern zur Koagulation führt. Völlig überraschend war außerdem der Befund, daß die so erhaltenen Polymerdispersionen einerseits praktisch eben-

Le A 20 714

so lagerstabil wie die Ausgangsdispersionen sind und andererseits die Herstellung von Beschichtungen gestatten, die eine deutlich erhöhte Wasserresistenz aufweisen. Im Rahmen analytischer Untersuchungen sind zwar Dispersionen, welche freie Sulfonsäuregruppen enthielten, in das Silbersalz überführt worden. Es handelte sich hierbei jedoch um extrem verdünnte Dispersionen mit einem Feststoffgehalt von lediglich 1-2 %, in denen anschließend Silberionen analytisch bestimmt wurden (O. Lorenz et al., Kautschuk, Gummi, Kunststoffe 33 (1980), S. 527). Derartige, extrem verdünnte Dispersionen sind selbstverständlich für die üblichen Einsatzgebiete wäßriger Kunststoffdispersionen unbrauchbar. Außerdem war bei derartigen extremen Verdünnungen selbstverständlich keine Koagulation zu befürchten.

Gegenstand der Erfindung sind demzufolge einen Feststoffgehalt von mindestens 10 Gew.-% aufweisende wäßrige Dispersionen von 0,1 bis 6 Gew.-% an eingebauten Sulfonatgruppen aufweisenden Polymeren, welche neben diesen Polymeren keine weiteren in Wasser löslichen, niedermolekularen Elektrolyte enthalten, dadurch gekennzeichnet, daß in den Dispersionen als Gegenionen zu den chemisch eingebauten Sulfonatanionen zu mindestens 80 Äquivalentprozent, bezogen auf die Gesamtmenge der vorliegenden Kationen, Kationen von mindestens zweiwertigen Metallen, des Silbers oder des einwertigen Kupfers vorliegen.

Gegenstand der vorliegenden Erfindung ist auch ein Verfahren zur Herstellung derartiger wäßriger Dispersionen, welches dadurch gekennzeichnet ist, daß

0054803

man einen Feststoffgehalt von mindestens 10 Gew.-% aufweisende wäßrige Dispersionen von 0,1 bis 6 Gew.-% an eingebauten Sulfonatgruppen aufweisenden Polymeren, in denen als Gegenionen Alkalimetall- oder einwertige Ammoniumkationen vorliegen, mit einem Kationenaustauscher behandelt, der mit Kationen der obengenannten Art beladen ist.

Gegenstand der Erfindung ist schließlich auch die Verwendung der erfindungsgemäßen Dispersionen als Beschichtungsmittel bei der Beschichtung von flexiblen oder nichtflexiblen Substraten.

Beim erfindungsgemäßen Verfahren können beliebige wäßrige Dispersionen von Polymeren eingesetzt werden, die

a) von den·dispergierten Polymeren abgesehen, keine weiteren, den Dispersionen hinzugefügte, in Wasser lösliche, niedermolekulare Elektrolyte enthalten,

b) einen Feststoffgehalt von 10 bis 55, vorzugsweise 15 bis 45 Gew.-% aufweisen,

c) die ein, 0,1 bis 6, vorzugsweise 0,2 bis 3 Gew.-% an eingebauten Sulfonatgruppen aufweisendes Polymer als disperse Phase enthalten und

d) in denen als Gegenionen zu den anionischen Sulfonationen des dispergierten Polymeren Alkalimetallionen, insbesondere Lithium-, Natrium- und/oder Kaliumionen und/oder einwertige Ammoniumionen, insbesondere solchen, die sich von tertiären Aminen ableiten, vorliegen.

Le A 20 714

Bevorzugt werden beim erfindungsgemäßen Verfahren dieser Definition entsprechende wäßrige Dispersionen von vorwiegend linearen Polyurethanen, wie beispielsweise die in den obengenannten Veröffentlichungen genannten, eingesetzt.

Für das erfindungsgemäße Verfahren geeignete Kationenaustauscher sind solche der an sich bekannten Art. Dies bedeutet, daß sowohl z.B. anorganische Kationenaustauscher beispielsweise auf Zeolith-Basis als auch organische Ionenaustauscher, beispielsweise solchen auf Basis von sulfoniertem Polystyrol bzw. sulfonierten Styrol-Divinylbenzol-Copolymerisaten eingesetzt werden können. Die letztgenannten organischen Ionenaustauscher sind bevorzugt.

Vor der Durchführung des erfindungsgemäßen Verfahrens werden die Ionenaustauscher in an sich bekannter Weise mit den gewünschten Kationen beladen. Geeignete Kationen sind Silberionen, Ionen des einwertigen Kupfers oder beliebige Kationen von mindestens zweiwertigen Metallen. Besonders gut geeignet sind Ionen des Silbers, des einwertigen Kupfers, des zweiwertigen Calciums, Bariums, Zinns, Bleis, Eisens, Kobalts, Nickels, Kupfers, Zinks, des dreiwertigen Aluminiums, Antimons, Wismuts, Eisens und/oder des vierwertigen Titans bzw. Zirkons. Besonders bevorzugt werden die Kationen des Silbers, des zweiwertigen Calciums, Bariums, Nickels, Kupfers, Zinks oder Bleis eingesetzt. Von ganz besonderem Interesse sind Calcium- und Bariumionen.

Le A 20 714

Bei der Durchführung des erfindungsgemäßen Verfahrens wird die Menge des mit den genannten Kationen beladenen Kationenaustauschers im allgemeinen so bemessen, daß für jedes Grammäquivalent an Sulfonatgruppen des dispergierten Polymeren 2 bis 100, vorzugsweise 5 bis 40 Grammäquivalente an im Kationenaustauscher vorliegenden Metallkationen zur Verfügung stehen.

Es hat sich insbesondere bei der Verwendung von mit mindestens zweiwertigen Kationen beladenen Kationenaustauschern als zweckmäßig erwiesen, den Polymerdispersionen vor der Durchführung des erfindungsgemäßen Verfahrens ca. 0,05 bis 10, vorzugsweise 0,5 bis 5 Gew.-%, bezogen auf Feststoff, eines nicht-ionischen Tensids einzuverleiben und/oder Dispersionen von solchen Polymeren zu verwenden, die neben den Sulfonatgruppen noch ca. 0,02 bis 8, vorzugsweise 0,3 bis 6 Gew.-% an eingebauten, nicht-ionisch-hydrophilen Segmenten, insbesondere an innerhalb von Polyetherketten eingebauten Ethylenoxideinheiten aufweisen. Außerdem ist es oft zweckmäßig, den Ionenaustauscher vor der Durchführung des erfindungsgemäßen Verfahrens mit einer wäßrigen Lösung eines Tensids zu spülen.

Geeignete, den Polymerdispersionen gegebenenfalls einzuverleibende, nicht-ionische Tenside sind solche der an sich bekannten Art, d.h. beispielsweise beliebige nicht-ionische Tenside, die 10 bis 70, vorzugsweise 20 bis 60 Gew.-% an hydrophoben Segmenten, insbesondere hydrophoben Kohlenwasserstoffresten und 30 bis 90, vorzugsweise 40 bis 80 Gew.-% an hydrophilen Resten, insbesondere an innerhalb von Polyetherketten einge-

Le A 20 714

bauten Ethylenoxideinheiten aufweisen, wobei diese Ethylenoxideinheiten in Form von Polyethylenoxideinheiten oder in Form von Polyetherketten vorliegen können, deren Alkylenoxideinheiten zumindest zu 60 %, vorzugsweise zumindest zu 80 %, aus Ethylenoxideinheiten und im übrigen aus anderen Alkylenoxideinheiten wie z.B. Propylenoxideinheiten, bestehen. Geeignete Tenside sind beispielsweise ethoxylierte i-Nonylphenole oder beispielsweise die, obiger Definition entsprechenden, nicht-ionischen Emulgatoren, die in Ullmanns Encyklopädie der technischen Chemie, 4. Auflage, Band 10, Seiten 456-457 beschrieben sind.

Für das erfindungsgemäße Verfahren besonders geeignete Dispersionen von eingebaute Polyetherketten der obengenannten Art und eingebaute Sulfonatgruppen aufweisenden Polymeren sind beispielsweise die in US-PS 4 237 264, US-PS 4 092 286 oder DE-OS 2 651 506 beschriebenen Dispersionen von eingebaute Sulfonatgruppen und eingebaute nichtionisch-hydrophile Gruppen aufweisenden Polyurethanen.

Zur Durchführung des erfindungsgemäßen Verfahrens werden die wäßrigen Polymerdispersionen vorzugsweise im Temperaturbereich zwischen 5 und 60°C, insbesondere zwischen 15 und 30°C mit den Kationenaustauschern behandelt, beispielsweise indem man die Dispersion eine mit dem Ionenaustauscher gefüllte Säule durchlaufen läßt. Hierbei erfolgt ein mindestens 80-%iger, in den meisten Fällen ein mindestens 90-%iger Austausch der Kationen, so daß in den anfallenden erfindungsgemäßen Verfahrensprodukten mindestens 80, vorzugsweise mindestens 90 Äquivalentprozent der vorliegenden Kationen solche der oben angegebenen Art darstellen.

Le A 20 714

0054803

Die als erfindungsgemäße Verfahrenprodukte anfallenden erfindungsgemäßen Dispersionen entsprechen bezüglich ihrer Lagerstabilität den Ausgangsdispersionen. Sie unterscheiden sich von diesen Ausgangsdispersionen jedoch vorteilhaft durch den Umstand, daß die mit ihnen hergestellten Flächengebilde eine erhöhte Wasserresistenz aufweisen, was sich durch eine verminderte Wasserquellung bemerkbar macht. Die erfindungsgemäßen Dispersionen sind für alle üblichen Anwendungsgebiete für wäßrige Kunststoffdispersionen geeignet. Sie eignen sich insbesondere zur Beschichtung beliebiger flexibler oder nichtflexibler Substrate, wie z.B. Papier, Textilien, Natur- und Syntheseleder, Holz, Metalle oder Kunststoffe, sowie als Klebstoff oder Imprägniermittel oder als Schlichte für Glasfasern oder Pigmentumhüllungen. Die Applikation erfolgt stets aus wäßriger Phase und richtet sich in ihrer Technik nach den Anwendungsgebieten. So kann man beispielsweise rakeln, streichen, spritzen, bürsten oder drucken, wobei nach der Applikation für ein Entfernen des Wassers zu sorgen ist.

Die erfindungsgemäßen, Silberionen enthaltenden Dispersionen, insbesondere die entsprechenden Polyurethandispersionen, eignen sich für die Herstellung von lichtempfindlichen Flächengebilden und stellen daher interessante Rohstoffe für die Herstellung von lichtempfindlichen photographischen Aufzeichnungsmaterialien dar.

In den nachfolgenden Beispielen beziehen sich alle Prozentangaben auf Gewichtsprozente.

Le A 20 714

Beispiel 1

(Herstellung einer wäßrigen Dispersion eines Sulfonatgruppen aufweisenden Polyurethans)

2000 g eines Polyesterdiols aus Adipinsäure, Neopentylglykol und 1,6-Dihydroxy-hexan der OH-Zahl 56 (1
Mol) werden mit 289 g Hexamethylendiisocyanat (1,72
Mol) bei 110°C zu einem NCO-Präpolymeren mit einem
NCO-Gehalt von 2,6 % umgesetzt. Das NCO-Präpolymer
wird in 5,5 l Aceton gelöst. Anschließend wird die
acetonische Lösung bei 50°C in eine Lösung von 47,5
g (0,25 Mol) N-(2-Aminoethyl)-2-aminoethansulfonsaures
Natrium in 550 ml entionisiertes Wasser eingerührt.
Schließlich wird das Aceton im Vakuum abgezogen und
durch gleichzeitige Zugabe von entionisiertem Wasser
ein Feststoffgehalt von 17,75 % eingestellt. Der Gehalt des dispergierten Polyurethans an Sulfonatgruppen liegt bei 0,85 %.

Beispiel 2

(Herstellung von mit Kationen beladenen Kationenaustauschern)

In 8 Parallelversuchen wird jeweils eine Glassäule
mit einem Innendurchmesser von 20 mm und einer Höhe
von 40 cm mit 50 g eines stark sauren Kationenaustauschers eines mittleren Teilchendurchmessers von 1 mm gefüllt. Bei dem Kationenaustauscher handelt es sich um das Sulfonierungsprodukt eines mit ca. 8 % Divinylbenzol vernetzten Polystyrols mit einem Gehalt an Sulfonsäuregruppen $-SO_3H$ von ca. 40 %. Das Beladen des in der $H^+$-Form vorliegenden Austauschers mit Kationen erfolgt mit 0,5 m Salzlösungen, bis das Eluat den gleichen pH-Wert wie die zugegebene Salzlösung aufweist. Abschließend wurde mit entionisiertem Wasser gewaschen. Auf diese Weise wurden die Säulen mit Silberionen, zweiwertigen Calcium-, Barium-, Nickel-, Kupfer-, Zink- und Blei-Ionen bzw. mit Aluminiumionen beladen. Schließlich wurde mit Ausnahme des mit Silber beladenen Ionenaustauschers jede Säule mit 100 ml einer 0,5 %igen Lösung des nachstehend genannten ethoxylierten Nonylphenols in entionisiertem Wasser gewaschen.

## Beispiel 3

(Erfindungsgemäßes Verfahren)

Die gemäß Beispiel 2 vorbereiteten Ionenaustauschersäulen werden bei 25°C mit jeweils 100 ml der Dispersion gemäß Beispiel 1 beschickt. Vor der Beschickung der Säulen wurde den einzelnen 100 ml-Proben der Dispersion 0,5 g ethoxyliertes Nonylphenol mit ca. 15 Ethylenoxideinheiten pro Molekül zugesetzt. Nur beim Austausch von $Na^+$ gegen $Ag^+$ wurde auf die Zugabe des nichtionischen Netzmittels verzichtet. Das Mengenverhältnis zwischen eingesetzter Dispersion und Ionenaustauscher entsprach bei allen Versuchen

Le A 20 714

einem Äquivalentverhältnis von eingebauten Sulfonatgruppen zu Kationen des Ionenaustauschers von ca. 1:40.

In der nachstehenden Tabelle wird der komplexometrisch ermittelte Kationenaustausch und die Wasserquellung ($w_a$) angegeben. Zur Bestimmung der Wasserquellung werden jeweils ca. 70 g der ca. 9-%igen Dispersionen möglichst blasenfrei in eine aus einer Polyethylenfolie geformten Wanne (200 x 100 mm) gegossen, die mit einer Doppelseitigen Klebefolie auf einer Glasplatte befestigt ist. Die Trocknung erfolgt bei Raumtemperatur. Die Wasserquellung der Folie wurde gravimetrisch ermittelt. Dazu wurde zunächst das nichtionische Tensid mit Wasser bei Raumtemperatur extrahiert und danach die Folie bis zur Gewichtskonstanz getrocknet. Die eigentliche Wasserquellung erfolgt durch 48-stündiges Aufbewahren in entionisiertem Wasser. Die gequollenen Proben werden mit Filterpapier abgetupft und in einem Wägeglas ausgewogen ($m_q$). Die Trocknung erfolgt bei 80°C bis zur Gewichtskonstanz ($m_t$). Der Massenbruch des Wassers im gequollenen Zustand ($w_a$) beträgt ($m_q - m_t$)/$m_q$.

| Kation | % Austausch | $w_a$ |
|---|---|---|
| $Na^+$ | - | 0,185 |
| $Ag^+$ | 97,6 | 0,145 |
| $Ca^{++}$ | 94,2 | 0,083 |
| $Ba^{++}$ | 95,9 | 0,098 |
| $Ni^{++}$ | 99,2 | 0,098 |
| $Cu^+$ | 94,2 | 0,100 |
| $Zn^{++}$ | 100 | 0,090 |
| $Pb^{++}$ | 95,9 | 0,086 |
| $Al^{+++}$ | 81,8 | 0,179 |

Le A 20 714

Beispiel 4

Analog zu Beispiel 1 wurde eine wäßrige Dispersion eines Sulfonatgruppen aufweisenden Polyurethans mit 0,99 % Sulfonatgruppen und einem Feststoffgehalt von 37 % hergestellt. 200 ml dieser Dispersion wurden auf eine Säule aufgegeben, die 40 g eines starksauren, feuchten Kationenaustauschers enthielt, der in der $Ag^+$-Form vorlag. Das Beladen der Säule erfolgte wie in Beispiel 2 beschrieben. Aus Vorsichtsgründen wurde die Säule vor Aufgeben der Dispersion mit 20 ml einer 1 %igen Lösung eines ethoxylierten Nonylphenols mit im Mittel 15 Ethylenoxideinheiten pro Molekül vorgespült. Danach wurde die Dispersion mit einer Tropfgeschwindigkeit von 15 bis 20 Tropfen pro Minute durch die Säule gegeben. Um ein Trockenlaufen der Säule zu verhindern, wurde mit wenig entionisiertem Wasser nachgewaschen. Es resultierte eine Dispersion mit einem Feststoffgehalt von 28,4 %, bei der ein quantitativer Austausch von $Na^+$ gegen $Ag^+$ erfolgt war, wie durch eine konduktometrische Titration der kationenausgetauschten Dispersion mit NaCl gezeigt werden konnte.

Beispiel 5

Zum Kationenaustausch von $Na^+$ gegen $Ca^{++}$ wurde eine gemäß US-PS 4 237 264 hergestellte, wäßrige Dispersion eines Sulfonatgruppen aufweisenden Polyurethans mit 0,43 % Sulfonatgruppen und 6 % chemisch eingebauten Ethylenoxideinheiten und einem Feststoffgehalt von 40 % verwendet. 50 g dieser Dispersion wurden auf

Le A 20 714

eine Säule aufgegeben, die ca. 45 g eines stark sauren, feuchten Kationenaustauschers enthielt, der in der $Ca^{++}$-Form vorlag. Nach dem Beladen mit einer 0,5 m Lösung von $Ca(NO_3)_2$ wurde der Austauscher solange mit entionisiertem Wasser gewaschen, bis die Leitfähigkeit des austretenden Wassers $2,5 \mu S \, cm^{-1}$ betrug. Der Latex wurde mit einer Geschwindigkeit von etwa 15 Tropfen pro Minute durch die Säule gegeben, dabei trat keine Koagulation ein. Die Säule wurde mit 50 ml entionisiertem Wasser nachgewaschen, so daß der Feststoffgehalt der ionenausgetauschten Dispersion 20 % betrug. Die komplexometrische Titration der Dispersion ergab 0,991 mg $Ca^{++}$/g Polymer, was einem Ionenaustausch von 92,3 % entspricht.

Von der Ausgangs- sowie der $Ca^{++}$-haltigen Dispersion wurden Folien gegossen, und die Spannungswerte der Folien nach DIN 53 504 bestimmt. Wie die nachfolgend aufgeführten Werte zeigen, bewirkt der Kationenaustausch von $Na^+$ gegen $Ca^{++}$-Folie eine erhebliche Verbesserung der Spannungswerte, insbesondere bei höherer Temperatur.

| | 20°C | | 80°C | |
|---|---|---|---|---|
| | $\sigma_{50}$ N cm$^{-2}$ | $\sigma_{100}$ N cm$^{-2}$ | $\sigma_{50}$ N cm$^{-2}$ | $\sigma_{100}$ N cm$^{-2}$ |
| $Na^+$-Folie | 175,4 | 237,1 | 113,4 | 156,8 |
| $Ca^{++}$-Folie | 210,4 | 281,5 | 174,3 | 25,,1 |

Le A 20 714

0054803

## Patentansprüche

1. Einen Feststoffgehalt von mindestens 10 Gew.-% aufweisende wäßrige Dispersionen von 0,1 bis 6 Gew.-% an eingebauten Sulfonatgruppen aufweisenden Polymeren, welche neben diesen Polymeren keine weiteren in Wasser löslichen, niedermolekularen Elektrolyte enthalten, dadurch gekennzeichnet, daß in den Dispersionen als Gegenionen zu den chemisch eingebauten Sulfonatanionen zu mindestens 80 Äquivalentprozent, bezogen auf die Gesamtmenge der vorliegenden Kationen, Kationen von mindestens zweiwertigen Metallen, des Silbers oder des einwertigen Kupfers vorliegen.

2. Dispersionen gemäß Anspruch 1, dadurch gekennzeichnet, daß die zu mindestens 80 Äquivalentprozent, bezogen auf die Gesamtmenge der Kationen, vorliegenden Kationen ausgewählt sind aus der Gruppe bestehend aus Silberionen, Ionen der einwertigen Kupfers, des zweiwertigen Calciums, Bariums, Zinns, Bleis, Eisens, Kobalts, Nickels, Kupfers, Zinks, des dreiwertigen Aluminiums, Antimons, Wismuts, Eisens, und des vierwertigen Titans und Zirkons.

3. Dispersionen gemäß Anspruch 1 und 2, dadurch gekennzeichnet, daß es sich um Dispersionen von vorwiegend linearen, eingebaute Sulfonatgruppen aufweisenden Polyurethanen handelt.

Le A 20 714

4. Verfahren zur Herstellung von Dispersionen gemäß Anspruch 1 und 2, dadurch gekennzeichnet, daß man einen Feststoffgehalt von mindestens 10 Gew.-% aufweisende wäßrige Dispersionen von 0,1 bis 6 Gew.-% an eingebauten Sulfonatgruppen aufweisenden Polymeren, in denen als Gegenionen Alkalimetall- oder einwertige Ammoniumkationen vorliegen, mit einem Kationenaustauscher behandelt, der mit Kationen der in Anspruch 1 genannten Art beladen ist.

5. Verfahren gemäß Anspruch 4, dadurch gekennzeichnet, daß man den Polymeridispersionen vor ihrer Behandlung mit dem Kationenaustauscher 0,05 bis 10 Gew.-%, bezogen auf dispergierten Feststoff, eines nichtionischen Tensids einverleibt.

6. Verfahren zur Herstellung von wäßrigen Polyurethandispersionen gemäß Anspruch 3, dadurch gekennzeichnet, daß man wäßrige Dispersionen von weitgehend linearen Polyurethanen mit einem Gehalt von 0,1 bis 6 Gew.-% an eingebauten Sulfonatgruppen, in denen als Gegenionen Alkalimetall- oder Ammoniumkationen vorliegen mit einem Kationenaustauscher behandelt, der mit Silberionen oder mit Ionen von mindestens zweiwertigen Metallen beladen ist.

7. Verfahren gemäß Anspruch 6, dadurch gekennzeichnet, daß man der Polyurethandispersion vor ihrer Behandlung mit dem Kationenaustauscher 0,05 bis 10 Gew.-%, bezogen auf Feststoff, eines nichtionischen Emulgators einverleibt.

Le A 20 714

8. Verfahren gemäß Anspruch 6, dadurch gekennzeichnet, daß man Dispersionen von solchen Polyurethanen verwendet, die neben den eingebauten Sulfonatgruppen noch 0,05 bis 10 Gew.-% an eingebauten nichtionischen hydrophilen Polyethersegmenten enthalten, deren Alkylenoxideinheiten zumindest zu 60 % aus Ethylenoxideinheiten bestehen.

9. Verwendung der Dispersionen gemäß Anspruch 1 bis 3 als Beschichtungsmittel für flexible oder nicht flexible Substrate.

## Europäisches Patentamt

# EUROPÄISCHER RECHERCHENBERICHT

EP 81 11 0174.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,Y | DE - A - 2 030 571 (BAYER AG)<br>* Anspruch; Seite 5 *<br>-- | 1,2,3,<br>9 |
| D,Y | KAUTSCHUK + GUMMI, KUNSTSTOFFE<br>Band 33, Nr. 7, Juli 1980<br>Heidelberg<br>LORENZ et al. "Bestimmung von Sulfon-<br>säure- neben Carboxylgruppen in wäßrigen<br>Polyesterurethandispersionen nach auto-<br>katalysierter Hydrolyse"<br>Seiten 527 bis 532<br>* Seite 527 *<br>-- | 1,2,3,<br>4,6 |
| A | DE - A1 - 2 807 861 (NHK SPRING CO.)<br>* Ansprüche 1, 11; Seite 23, letzter Ab-<br>satz; Seite 46 *<br>-- | 1,2,9 |
| A | EP - A1 - 0 013 440 (BAYER AG)<br>* Ansprüche 1, 2; Seite 5, Zeilen 8 bis<br>27; Seite 6, Zeile 23 bis Seite 7,<br>Zeile 2; Seite 9, Zeilen 5 bis 19 *<br>-- | 1,3,8,<br>9 |
| A | Patent Abstracts of Japan<br>Band 4, Nr. 106, 30. Juli 1980<br>Seite 45C20<br>& JP - A - 55 - 66945<br>---- | 1,2 |

### KLASSIFIKATION DER ANMELDUNG (Int. Cl.³)

C 08 G 18/83
C 08 G 18/08
C 08 G 85/00
C 08 F 8/44
C 08 J 3/02
C 08 G 18/48
C 09 D 3/72

### RECHERCHIERTE SACHGEBIETE (Int. Cl.³)

C 08 F 8/00
C 08 G 18/00
C 08 G 85/00
C 08 J 3/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-satze
E: alteres Patentdokument, das jedoch erst am oder nach dem Anmeldedatum veröffentlicht worden ist
D: in der Anmeldung angeführtes Dokument
L: aus andern Gründen ange-fuhrtes Dokument

&: Mitglied der gleichen Patent-familie, übereinstimmendes Dokument

| | Der vorliegende Recherchenbericht wurde für alle Patentansprüche erstellt. |
|---|---|

| Recherchenort | Abschlußdatum der Recherche | Prufer |
|---|---|---|
| Berlin | 08-03-1982 | MARX |

EPA form 1503.1  06.78